# EUROPEAN PATENT APPLICATION

(11) **EP 4 477 072 A1**
(43) Date of publication of application: **18.12.2024**
(21) Application number: 23179178.1
(22) Date of filing: 14.06.2023
(51) Int. Cl.: A01J 15/12, B01D 29/64, B01D 29/66

(54) **APPARATUS FOR PROCESSING A CREAM OR MILK SUBSTANCE, AND A RELATED METHOD**

(71) Applicant: Arla Foods amba, 8260 Viby J (DK)
(72) Inventor: MADSEN,, John Charles, 8260 Viby J (DK); LENARTZ,, Stephan, 8260 Viby J (DK)
(74) Representative: Potter Clarkson

(57) **Abstract**

A filter (50), for use in butter-making, comprises a hollow housing (51) supporting therein a filter screen (52) that at least partly surrounds (i) at least one rotatable auger conveyor (56) extending longitudinally along the interior of the housing (51), the housing (51) being capable of receiving a primary buttermilk fraction within its interior such that on operation of the auger conveyor buttermilk passes through the filter screen to create a filtered buttermilk fraction; and butter forming part of the primary buttermilk fraction is entrained by the auger conveyor (56) and moved longitudinally along the housing (51) to (ii) one or more butter outlet (61) via which it exits the housing (51). The filter further includes (iii) one or more buttermilk outlet (58) to which in use of the filter the filtered buttermilk fraction passes after passing through the filter screen; and (iv) a normally closed, selectively openable valve (59) that is connected to the housing (51) and that when open permits flow of buttermilk within the housing (51) for flushing butter from the auger conveyor (56) and/or the filter screen (52).

## Description

The invention concerns apparatus for processing a cream or milk substance during the making of butter, and a related method.

As is well-known, the essential steps in the making of butter involve the churning of cream or cream-containing milk, i.e. raw milk (or a cream or milk substance that has similar properties to cream or raw milk) until butterfat, in the form of globules, crystals, grains and/or free butterfat, forms as a distinct fraction in liquid buttermilk (which latter is the liquid fraction that also is formed during churning).

Once this occurs to an acceptable extent the buttermilk is separated (e.g. through draining, or other techniques) from the butterfat/buttermilk mixture to leave (typically semi-solid) butterfat. The butterfat is then worked (i.e. subjected to mechanical treatment such as kneading and compressing) to cause the butterfat globules, etc., to cohere and form a single mass of butter. This then may be salted, flavoured, cut, shaped and packaged as desired in order to produce a consumable or saleable food product.

Butter-making techniques have been known for thousands of years. Until the 19^{th} Century much butter production took place on farms, often using manual tools or hand-powered butter-making equipment. Industrialisation of butter-making processes gained dominance thereafter, and nowadays most butter consumed globally is manufactured in highly automated factories. In these, machines perform the process steps outlined above on typically a large scale. Butter factories often process thousands of litres of cream or milk per day into butter.

Butter-making plant typically includes a separator in which separation of the butterfat from the buttermilk occurs after the churning step. The separator in many systems is a chamber defining a downwardly inclined flow path to which the butterfat and buttermilk mixture explained above, resulting from churning of cream etc. in a churn, is fed. The buttermilk drains, via a drain pipe, from the bottom of the separator chamber. The butterfat is retained on a drain grille and passes along the chamber to be conveyed via a further, downwardly extending chute, to one or more working stages where the aforementioned mechanical working of the butterfat takes place.

The separated buttermilk flows to one or more balancer tanks. From the balancer tank(s) a percentage of the buttermilk may be recycled as explained below. Most of the buttermilk in one way or another has commercial value and may be extracted from the balancer tank(s) for conveying to a silo and thence for additional processing, packaging and distribution. Examples of uses of buttermilk include production of milk powder and evaporated milk.

In the separator a major part of the buttermilk flows under gravity into the drain pipe. It further is known to wash the butterfat in the separator chamber, using buttermilk that is recycled from the balancer tank(s), in order to try and maximise the separation of buttermilk and butterfat.

Despite such measures however it is known that some butterfat becomes conveyed with the buttermilk from the separator to the balancer tank(s) where the drained buttermilk is stored before undergoing further processing. In particular there is a tendency for small grains of butterfat to become entrained in the drained buttermilk stream.

If this butterfat is not recovered from the buttermilk it initially passes to a buttermilk storage tank downstream of the balancer tank. Here it floats on top of the buttermilk and finally collects at the bottom of the tank, when the buttermilk is drained from the storage tank. The commercial worth of this butterfat is lost when the storage tank is washed out during cleaning.

It is undesirable to interrupt operation of modern butter-making machinery any more than is essential, since this adversely impacts the economics of the butter-making process and can affect product consistency and quality. Consequently it is an aim in butter production plant to run the machinery on as close to a continuous basis as possible.

It is known to include further measures aimed at minimising the quantity of butterfat that becomes conveyed to the buttermilk storage tank, and thereby minimise the number of occasions on which washing of the tank becomes required.

In this regard it is known to include one or more filters arranged in-line in the path taken by the buttermilk from the separator. The aim of including these is to trap the butterfat before it passes to the storage tank; and permit the flow only of buttermilk from the filters onwards in the flow path to the tank.

Examples of such filters are disclosed in FR 1239426 A and FR 2492220 A. US 3069996 A in contrast discloses butter-making apparatus in which filtering of a milk stream occurs at the beginning of the butter-making process, before it reaches a churn.

In-line filters as are known from FR 1239426 A and FR 2492220 A can help to prevent the transport of butterfat to the buttermilk silo(s) but they are themselves prone to clogging with butterfat in use. When this occurs they require cleaning or exchanging. This undesirably interrupts production in a butter-making plant and usually results in the loss of at least some of the butterfat.

It has been proposed to add one or more rotary scrapers to the insides of cylindrical mesh screen in-line filters in food production plant in order to try and minimise the frequency with which cleaning or replacement activity is needed. Examples of such scrapers are visible at Scraper arrangement - Rotating - Hiflux Filtration A/S % (hiflux-filtration.com).

The described scraper and filter combinations however at best are only partially successful when processing the butterfat/buttermilk mixture in the in-line buttermilk drain filters described above. This is primarily because the scrapers tend to force the butterfat into the filter mesh, which then becomes restricted or blocked. This reduces the flow of buttermilk through the filter and reduces process efficiency.

Over time moreover the scrapers themselves become clogged with butterfat. Their construction as multi-component structures means they require extensive and careful cleaning, necessitating dismantling of the filter, in order to maintain the stringent hygiene standards that apply in food production factories.

In light of the foregoing there is a need for improvements in aspects of butter-making.

According to the invention in a first aspect there is provided a filter, for use in butter-making, comprising a hollow housing supporting therein a filter screen that at least partly surrounds at least one rotatable auger conveyor extending longitudinally along the interior of the housing, the housing being capable of receiving buttermilk within its interior such that on operation of the auger conveyor buttermilk passes through the filter screen to create a filtered buttermilk fraction; and butter forming part of the received buttermilk is entrained by the auger conveyor and moved longitudinally along the housing towards one or more butterfat outlet via which it is capable of exiting the housing, the filter further including one or more buttermilk outlet to which in use of the filter the filtered buttermilk fraction passes after passing through the filter screen; and a normally closed, selectively openable valve that is connected to the housing and that when open permits flow of buttermilk within the housing for flushing butter from the auger conveyor and/or the filter screen via the butterfat outlet.

The combination in such a filter of an auger conveyor, which is relatively easy to clean owing to its inherent shape, and an openable buttermilk flush valve means it is possible to clean the filter *in situ.* Hence accumulated butterfat, that might otherwise reduce the efficiency of the filter screen, can be cleared with minimal interruption to automated production of butter and in a manner that recovers a substantial percentage of the butterfat downstream of the separator.

In a further aspect of the invention there is provided apparatus for processing a cream or milk substance during the making of butter or a butter-like product, the apparatus comprising (a) a source of the cream or milk substance; (b) a churn, that is connected to the source, to which the cream or milk substance is fed from the source and in which the cream or milk substance is churned to form a butterfat and buttermilk mixture; (c) a primary separator that is connected to the churn and to which the butterfat and buttermilk mixture is fed following churning, the primary separator causing separation therein of buttermilk and butterfat from one another in a primary separation step in order to form respective primary buttermilk and primary butterfat fractions; and (d) a secondary separator connected to receive buttermilk after it has been separated in the primary separator, characterised in that the secondary separator comprises (e) a hollow housing supporting therein (f) a filter screen that at least partly surrounds (g) at least one rotatable auger conveyor extending longitudinally along the interior of the housing, the housing being capable of receiving buttermilk within its interior such that on operation of the auger conveyor buttermilk passes through the filter screen to create a filtered buttermilk fraction; and butterfat forming part of the primary buttermilk fraction is entrained by the auger conveyor and moved longitudinally along the housing towards (h) one or more butterfat outlet via which it is passed to (i) further butter processing apparatus, the apparatus further including (j) one or more buttermilk outlet to which the filtered buttermilk fraction passes after passing through the filter; and (k) a normally closed, selectively openable valve that is connected to the housing and that when open permits flow of buttermilk within the housing for flushing butterfat from the auger conveyor and/or the filter screen via the butterfat outlet.

This aspect of the invention extends to process plant or other apparatus including a filter, as defined above. Consequently the advantages that arise in the filter when considered on its own also arise in process plant including the filter, as described herein. Overall the efficiency of the filter (which when installed in plant as defined functions as a secondary separator of entrained butterfat from part of the primary buttermilk fraction), and hence also of the apparatus as a whole, is significantly greater than in plant having prior art butterfat filtering systems.

Preferably the at least one auger conveyor includes at least one rotatable auger element extending longitudinally along the housing at least partly surrounded by the filter screen, the auger element being positioned so that on rotating it sweeps the inside of the filter screen and conveys butterfat inside the filter along the hollow housing towards the one or more butterfat outlet.

References herein to the auger conveyor "*sweeping*" the inside of the filter screen are to cyclical passage of the auger conveyor, when rotating, with a sufficiently small gap spacing it from the filter screen that butterfat lying on the inside surface of the filter screen becomes conveyed by the auger conveyor and transported towards the butterfat outlet. This action also may cause butterfat lying in the mesh of the filter screen to become so entrained and transported towards the butterfat outlet.

Preferably the auger conveyor is or includes an elongate, single element defining, extending along its length, a continuous auger spiral.

This design of auger conveyor is particularly easy to clean *in situ* inside the filter screen. The smooth, continuous surface of the auger spiral is such that butterfat is unlikely to adhere to the auger conveyor or, if this is not the case, any accumulated butterfat is readily removed when the auger conveyor is washed using buttermilk as described herein.

More particularly the continuous spiral preferably is outwardly facing and defines a series of smoothly inclined conveyor flights that are spaced one from another along the length of the auger conveyor and are smoothly spirally connected one to the next.

Such features of the auger conveyor further enhance the ability to clean it *in situ* inside the filter in the manner explained herein while permitting it effectively to convey butterfat as described.

Further preferably the filter, or apparatus, may include an elongate rotary drive shaft that is secured at one end to an end of the rotatable auger element, the drive shaft being operatively connected to a source of rotary drive whereby on rotation of the drive shaft about its longitudinal axis the auger element is caused to rotate about a further longitudinal axis that is an extension of the longitudinal axis of the drive shaft.

This aspect provides rotary power to the auger conveyor in a manner that readily can be sealed against the ingress of contaminants inside the filter while maintaining an effective connection to a source of rotary power such as an electric motor. In particular only a single rotary seal, on the drive shaft, is required.

Optionally but desirably the longitudinal axis of the auger element extends vertically; and the normally closed, selectively openable valve is located in a vertically extending flow path that includes the auger element with the selectively openable valve preferably being adjacent a lower end of the flow path.

This arrangement provides multiple advantages. Firstly the provision of the selectively openable valve in association with a vertically extending auger element means that gravity readily can be used to assist with flushing of buttermilk through the filter in order to clean it when the valve is opened. It is necessary only to pump or otherwise convey the buttermilk (for example from a buttermilk balancer tank) to an inlet adjacent the top of the auger element and then open the selectively openable valve for the entire auger element to become washed with buttermilk along its length. This action also ensures thorough washing of the filter screen.

Furthermore positioning the auger element in a vertically extending orientation means that any rotary seal provided on a drive shaft connected to the auger element is likely to be at the top end of the auger element. Consequently the seal needs essentially to operate to prevent contaminant ingress since it is unlikely that egress of buttermilk would occur via a top-mounted rotary seal. Hence the design of the rotary seal may be focussed on the prevention of contaminant ingress as a priority; and the hygiene of the apparatus may thereby be maximised.

Even more preferably the filter screen is cylindrical and encircles the auger conveyor. Further optionally buttermilk in use of the filter or apparatus is fed to the interior of the filter and is filtered by passing outwardly through the filter screen.

A cylindrical filter is relatively straightforward to manufacture with a fine mesh density. However it is not excluded that other filter shapes, including but not limited to a double lobe (peanut-like) cross-section filter screen, may alternatively be included.

Furthermore it is not essential that the buttermilk flow path inside the filter is from the interior outwardly via the filter screen. This path however does lend itself to ready connection of the filter to define a smooth flow path.

The invention extends to a filter or apparatus, as defined, when it contains a primary buttermilk fraction that includes butterfat in the form of butter grains, globules and/or crystals.

According to a further aspect of the invention there is provided a butter-making method comprising the steps of (I) providing a cream or milk substance (m) churning the cream or milk substance to produce a butterfat and buttermilk mixture, (n) performing a primary separation step to separate the butterfat from the buttermilk in the mixture and thereby form a primary buttermilk fraction and a primary butterfat fraction, (o) subjecting at least some of the primary buttermilk fraction to a secondary separation step, thereby producing a secondary butterfat fraction and a secondary buttermilk fraction; and (p) using the primary butterfat fraction and the secondary butterfat fraction to produce butter, wherein the primary buttermilk fraction includes butterfat and wherein the secondary separation step includes (q) passing at least some of the primary buttermilk fraction through a filter screen that at least partially surrounds an auger conveyor that is rotatable so that it sweeps the inside of the filter screen and transports a secondary butterfat fraction temporarily forming part of the primary buttermilk fraction to a butterfat outlet.

Such a method advantageously may be practised using a filter and/or apparatus as defined.

Preferably the butterfat forming part of the primary buttermilk fraction includes butter grains. However other forms of butterfat, including crystals and globules, are not excluded.

In embodiments of the method the step of passing at least some of the primary buttermilk fraction through a filter screen preferably includes causing buttermilk to pass outwardly through the filter screen from the interior thereof. As explained, this is believed to be an efficient method of filtering the primary buttermilk fraction employed in the method.

The method further optionally but desirably includes the step of cleaning the auger conveyor *in situ* at least partially surrounded by the filter screen. In particular this aspect of the method preferably includes opening a normally closed, selectively openable valve that is connected to a housing that supports the filter screen and that when open permits flow of buttermilk within the housing for flushing butterfat from the auger conveyor and/or the filter screen via the butterfat outlet.

A step of *in situ* cleaning is a significant advantage of the invention over the prior art. As noted, prior art filters require at least partial dismantling in order to clean accumulated butterfat from them.

Moreover as explained above the use of a normally closed valve that is openable to permit washing of the filter and auger conveyor using buttermilk is efficient and maximises both the use of the buttermilk and the recovery of butterfat from the filter.

There now follows a description of preferred embodiments of the invention, by way of non-limiting example, with reference being made to the accompanying figures in which:
Figure 1 is a schematic, partly sectioned view of prior art commercial apparatus for making butter;
Figure 2 is a schematic, partly sectioned view of a filter, according to the invention, that may be incorporated into apparatus such as that shown in Figure 1;
Figure 3 is a schematic view of apparatus, for making butter, including a filter such as the filter of Figure 2; and
Figure 4 is a perspective view of one form of auger conveyor that is shown in schematic form in Figure 1.

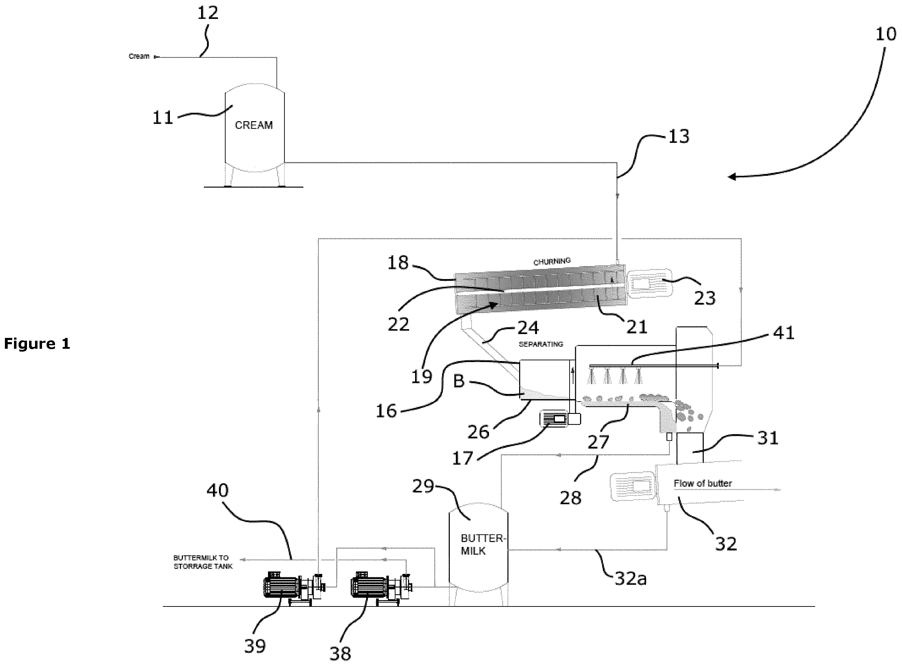

Referring to Figure 1 there is shown one form of prior art butter-making plant 10. The Figure 1 plant forms the basis of embodiments of the invention as defined herein, although within the scope of the invention significant departures from the arrangement shown in Figure 1 may be included.

In Figure 1, which therefore is exemplary only and is not intended to limit the scope of this disclosure, an optional cream balance tank 11 in the form of an insulated, food-grade material tank, is connected via an inlet pipe 12 to receive cream or milk, or another cream-like or milk-like substance, that is to be processed into butter. Pipe 12 may for example be connectable to a mobile tanker that from time to time delivers cream, etc., for processing. Alternatively pipe 12 may be connected or connectable to a different kind of source such as a larger store of cream, etc.

Cream to be processed is fed typically via an outlet pipe 13 connected to the lowermost part of the tank 11. Outlet pipe 13 may include one or more intermediate sub-systems as may occur to the person of skill in the art.

The cream, etc., passes via pipe 13 to a churn 18. Churn 18 is an elongate, hollow cylinder inside which an agitator 19 is supported for rotation about an axis extending longitudinally along the interior of the cylinder. In the illustrated embodiment agitator 19 includes a series of paddles or blades 21 mounted at intervals along a rotatable shaft 22 that is supported at either end in journal bearings that in turn are supported on the respective end walls of the cylinder.

At one end the shaft 22 protrudes externally of the cylinder via a rotary seal and is secured to the output shaft of an electric motor 23. Motor 23 may be energised under the control of control equipment such as but not limited to a programmable line controller (PLC) to cause controlled rotation of the shaft 22, and hence the paddles 21 fixed thereto, inside the churn 18.

The precise arrangement of the agitator may be varied in embodiments of the invention. Numerous designs of the agitator will be known to or will occur to the person of skill in the art.

The longitudinal axis of the churn 18 is inclined downwardly in the right-left direction as viewed in Figure 1. Cream, etc., entering the churn via the pipe 13 therefore will tend to flow from the upper, right-hand end of the churn 18 towards the left-hand end. As it does so the paddles 21 are caused to rotate under the influence of the motor 23 and thereby perform the fundamental conversion step of causing the cream to become a mixture B of butterfat and buttermilk.

At its lower, left-hand end churn 18 connects to an exit pipe 24. This feeds inclinedly downwardly to a separator 26 that in order to take advantage of gravity is located vertically below the churn 18. This together with the orientation of the churn 18 and the action of the agitator 19 cause the buttermilk/butterfat mixture B to pass via the exit pipe 24 into the left-hand end of separator 26.

The separator 26 is in essence an elongate, hollow cylinder the diameter of which enlarges part-way along its length in the left-right direction as viewed in Figure 1. The left-hand end of the separator 26 as viewed is a relatively small diameter drum 16, to which the mixture B is initially fed, that is secured to an enlarged-diameter, right-hand end of the separator. The left- and right-hand parts are secured together and are capable of rotating under the influence of an external motor 17 in order to tumble the mixture B as it passes through the separator.

Pipe 24 feeds the buttermilk/butterfat mixture B resulting from operation of the churn 18 into the left-hand end of the separator 26. The change in height represented by the diameter increase part-way along the separator 26 gives rise to a gradient that tends to cause the buttermilk/butterfat mixture B to flow towards the right-hand end of the separator 26. The tumbling action described above tends to promote the flow of the liquid part of the mixture B towards the right-hand end of the separator 26.

In the enlarged diameter, right-hand section of the separator a horizontal drain grille 27 extending internally across the separator promotes separation of the buttermilk from the butterfat as a primary buttermilk fraction. This occurs by reason of the buttermilk draining through the grille to the bottom of the separator, while the butterfat is retained on the grille 27 during movement to the right as a result of gentle pressure in turn resulting from the tumbling motion. From this location the primary buttermilk fraction passes via a pipe 28 into a buttermilk balancer tank 29.

The butterfat continues to advance to the right-hand side of the separator 26 until it falls off the end of the drain grille 27 into a mouth 31 feeding the remainder of the butter-making plant, which may include working cylinders (of which an example 32 is visible in Figure 1) or working stations and other processing equipment as may be familiar to the person of skill in the art. The section secured to mouth 31 is fixed and does not rotate with the remainder of the separator 26 when the motor 17 is energised. The person of skill in the art will readily be able to envisage ways of making the separator parts rotatable over the majority of the length of the separator 26 and fixed at its right-hand end as viewed in Figure 1.

Precise details of the working cylinder 32 are not material to this description. From the vicinity of the working cylinder(s) etc the butter is conveyed e.g. via pipework or a handling conveyor to e.g. a weighing and packaging/labelling/printing station, and thence to a cold store or for loading onto chilled distribution wagons.

Most of the buttermilk in the balancer tank 29 is pumped using a connected pump 39 in pipework from the balancer tank 29 to feed a spray nozzle array 41 located inside the fixed, right-hand end of separator 26.

Spray nozzle array 41 overlies the drain grille 27 within the separator 26. On activation of pump 39 the nozzle array 41 causes washing of the drain grille 27 with buttermilk. The aim of this is to remove all the buttermilk in the buttermilk/butterfat mixture B from the buttermilk that enters the mouth 31, and also to control the temperature of the mixture B. Such washing buttermilk itself then drains via pipe 28 back to the buttermilk balancer tank 29.

Buttermilk in the balancer tank 29 that is not pumped by pump 39 may be drawn off under the influence of a separate pump 38 via an outfeed pipe 40 for conveying to a buttermilk storage tank, or further buttermilk processing apparatus the details of which are not important aspects of this disclosure.

The apparatus as shown in Figure 1 as mentioned is intended to create the buttermilk/butterfat mixture B through churning; and then separate the buttermilk and butterfat from one another in order to create two individually processable streams of product. In practice however separation in the separator 26 does not complete fully, and consequently some butterfat passes from the separator 26 into the pipe 28 and thence to the buttermilk balancer tank 29. This occurs in particular with respect to small butterfat particles that are too small to be retained on the drain grille 27 and therefore either fall under gravity or are washed by the buttermilk fed through the nozzles 41 into the buttermilk stream that enters pipe 28.

As explained this is associated with numerous disadvantages associated with accumulation of butterfat in any downstream buttermilk storage tank. It therefore is known as mentioned to install a filter at or adjacent the bottom of the separator 26 in order to try trap any butterfat as it passes from the separator 26 into the pipe 28.

As also explained however the known filters are inefficient in part because they readily clog with butterfat. When this occurs the flow of buttermilk reduces, potentially significantly. Any attempts at cleaning the filters moreover requires dismantling of the filter housings and any installed scrapers; and/or results in wastage of buttermilk or butterfat. Since both buttermilk and butterfat are commercially valuable commodities this is also undesirable.

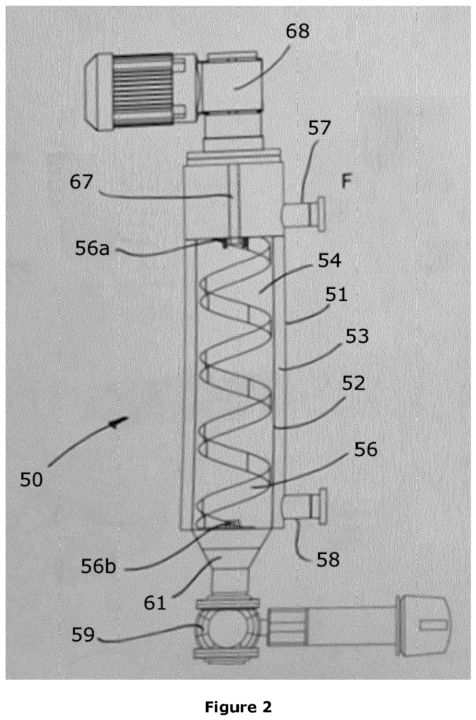

Figure 2 shows in schematic view a filter 50, according to the invention, that may be used in or in conjunction with plant such as (but not limited to) that shown in Figure 1.

The filter 50 shown in Figure 2 comprises an elongate, hollow, cylindrical housing 51 that when the filter 50 is installed for use extends vertically as illustrated (although in other embodiments could be at a different orientation such as a horizontally extending orientation). Housing 51 typically would be manufactured from a rigid, strong, impervious material such as a stainless steel. Other food-grade materials however are useable within the scope of the invention.

Supported inside the housing 51 is an elongate, hollow, cylindrical filter screen 52. Filter screen 52 extends vertically in a similar manner to and concentrically with the housing 51, such that the shape and orientation of the exterior of the filter screen 52 are essentially complementary to the shape and orientation of the interior of the housing 51. A relatively small annular gap 53 extends between the filter screen 52 and the housing 51 along the length of the interior of the housing 51.

Filter screen 52 has a filter mesh construction. As is well known to the person of skill in the art this may include a frame, that defines the essentially cylindrical shape of the filter screen 52, supporting a mesh consisting of a regular pattern of apertures of a chosen size. Alternatively the material of the mesh may be sufficiently rigid that a distinct frame is not required. Numerous designs of such screens are possible and will occur to the person of skill in the art. In one preferred but non-limiting form the apertures formed in the mesh are of a size of 100 µm, with conventions for measuring the size of mesh apertures being applicable and known to the person of skill in the art. The mesh screen may be formed from a range of materials, including metals and plastics. It is however of course important that the mesh screen is formed from a material that is suitable for use in food production apparatus.

By reason of its shape the filter screen 52 defines an inner, cylindrical hollow space 54 extending along the filter 50. A rotatable auger conveyor 56, that is shown schematically in Figure 2, extends along the space 54 from one end of the filter 50 to the other.

Auger conveyor 56 is mounted by way of upper and lower rotary bearings 56a, 56b at either end of the housing 51 that permit its powered rotation as explained below.

At its upper end the housing 51 includes a buttermilk inlet 57 that is connected as explained below such that buttermilk may via the inlet be received in the interior of the filter 50. Inlet 57 hence feeds buttermilk to the upper end of the interior space 54 of the auger conveyor 56.

As a result of the vertical orientation of the filter 50 this received buttermilk tends to flow downwardly from the vicinity of the inlet 57. On operation, i.e. powered rotation, of the auger conveyor 56 the buttermilk is both conveyed along the filter 50 and is forced to pass outwardly through the filter screen 52 into the annular gap 53. At this time any butterfat in the buttermilk becomes trapped in the filter screen 52 while the liquid buttermilk passes freely into gap 53. The mesh size/density of the filter screen 52 is chosen to permit the flow of liquid buttermilk while preventing the outward flow of even small particles of butterfat. As a result the buttermilk in the space 53 is of a high level of purity, with little or preferably no contamination by butterfat.

From the gap 53 the buttermilk exits the housing 51 via a buttermilk outlet pipe 58 that extends laterally at a lower end of the housing 51. The pressure induced in the liquid buttermilk by the action of the auger conveyor 56 ensures that the exiting buttermilk flows away from the filter 50 for processing in the remainder of the apparatus which in a preferred embodiment is similar to the apparatus of Figure 1.

The foregoing describes normal operation of the filter 50, when the apparatus 10 is in a normal production mode. The described operation of the auger conveyor 56 however over time causes the filter screen 52 to become clogged with butterfat. When this occurs the flowrate of buttermilk outwardly through the filter screen 52 diminishes and/or the fluid pressure caused by the auger action increases. It therefore is desirable to be able to clear the filter screen of butterfat from time to time.

Butterfat also can accumulate on the auger conveyor 56, necessitating periodic cleaning of this element as well.

Such cleaning of the internal parts of the filter 50 is achieved through operation of a normally closed, selectively openable valve 59 that is connected via a butter outlet in the form of tapered buttermilk flush pipe 61 to the lowermost part of the housing 51 as illustrated.

Valve 59 as indicated is normally closed and it can selectively be opened for example on sending of a command signal from control apparatus to a solenoid forming part of the valve, or through manual operation of an actuator element such as a lever or wheel. Other, non-limiting means of actuating the valve 59 also are within the scope of the invention.

When it is opened the valve 59 permits the flow of buttermilk inside the filter 50 out of the bottom of the housing 51 in a vertically extending flow path including the auger conveyor 56 and especially its auger element 67 which is described below.

Such flow of the buttermilk washes the filter screen 52 and the auger conveyor 56 in a manner clearing butterfat from these components. The design of the buttermilk flush pipe 61 is such that the buttermilk preferentially flows through it, rather than towards the buttermilk outlet 58, thereby entraining butterfat inside the mesh screen 52 and on the auger conveyor 56 and transporting it away from the interior of the filter 50.

The described arrangement for cleaning the interior of the filter 50 is strongly advantageous over the prior art, because it permits clearing of butterfat from the filter 50 without a requirement to dismantle the filter housing 51. Rather, the cleaning operation may be effected simply by opening (or commanding opening of) the valve 59, which may then readily be closed when cleaning is complete and it is required to resume normal butter production.

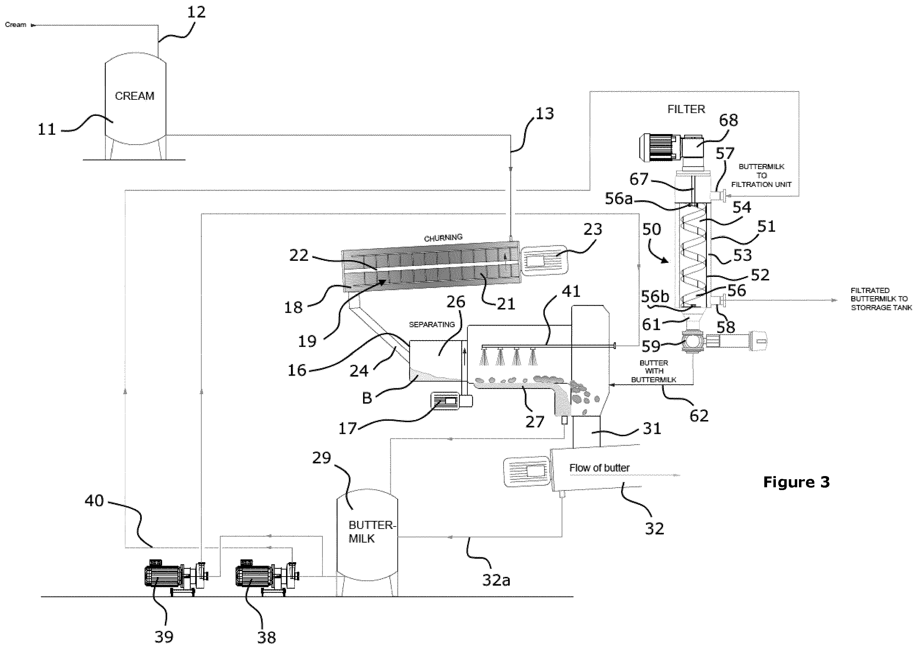

Figure 3 shows one way of incorporating a filter such as filter 50 into butter-making apparatus such as that shown in Figure 1.

In Figure 3 most of the components are as illustrated in Figure 1, with the exception of inclusion of filter 50 as illustrated and as described below, and modification of the plant pipework to accommodate this.

Filter 50 could be incorporated at a different location in butter-making apparatus than that illustrated in Figure 3 and/or may not be of the precise design shown in Figure 2.

In Figure 3 the outfeed pipe 40 from buttermilk balancer tank 29 does not feed directly to a buttermilk store or further processing apparatus as in Figure 1; and instead the buttermilk of the primary buttermilk fraction pumped by pump 38 is fed to the inlet 57 at the upper end of filter 50. Hence this constitutes a supply of buttermilk fed through the filter 50 during normal operation as described above.

After being filtered in the filter 50 the buttermilk then exits via outlet pipe 58 and thence passes to a buttermilk store or further processing apparatus as in the prior art. Hence in normal (i.e. butter-producing) operation the filter 50 is interposed in-line in the outfeed pipe 40 and filters the buttermilk in that pipe as described.

When it is required to clean the interior of the filter 50 valve 59 is opened as described and the described filter cleaning activity commences. The resulting flow, consisting of buttermilk and butterfat that has been cleaned from the filter screen 52 and the auger conveyor 56, passes along a butterfat recovery pipe 62 to which the outlet of valve 59 is connected. Butterfat recovery pipe 62 feeds into the interior of separator 26, where separation of the recovered butterfat (i.e. butterfat cleaned from the auger conveyor and the filter screen) from the cleaning buttermilk occurs. The latter then flows via silo pipe 28 to the buttermilk silo.

As a result of the described arrangement in normal operation the buttermilk conveyed from the filter via buttermilk outlet pipe 58 in effect has undergone two separation operations (i.e. once in the separator and then again in the filter 50).

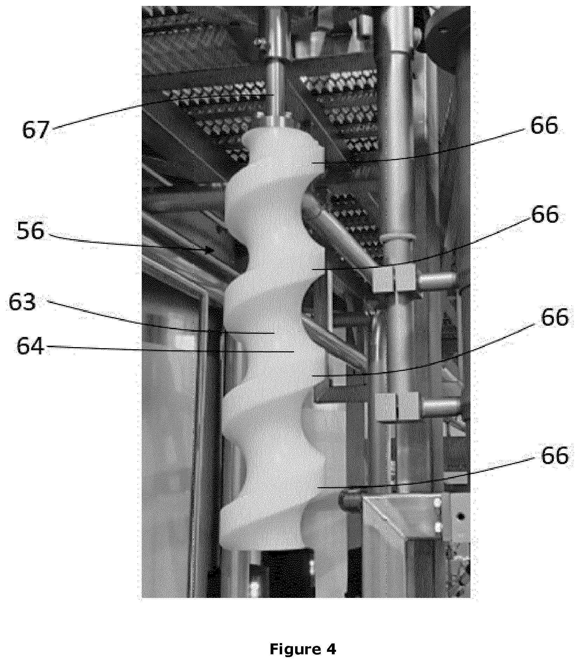

Referring now to Figure 4 one form of rotatable auger conveyor 56 for use in the invention is illustrated in perspective view. This comprises a rotatable auger element 63 that extends longitudinally along the interior of housing 51 as described. Auger element 63 is manufactured as a single item from e.g. a food-grade plastics material (or another food-grade material, as will occur to the person of skill in the art).

Manufacturing the auger element 63 from a plastics material means it readily can be moulded as a one-piece item.

As will be apparent from Figure 4 the auger element 63 is such that when supported inside the filter housing 50 by the bearings 56a, 56b it is rotatable in a manner that sweeps the inside of the filter screen and conveys butterfat to the butterfat outlet 58.

As is further apparent from Figure 4 the auger element 63 defines along its length a continuous auger spiral 64. This is outwardly facing and defines a series of conveyor flights 66. These are spaced from one another along the element 63 and are smoothly spirally connected one to the next so that each conveyor flight leads into the next adjacent conveyor flight along the auger conveyor 56.

These features of the auger conveyor are beneficial in rendering it easy to clean through buttermilk flushing as explained. In particular the smooth, continuous outer surface resulting from making the auger element 63 as a one-piece item is advantageous in this regard.

The auger conveyor 56 additionally includes an elongate rotary drive shaft 67 secured to and protruding vertically from the uppermost end of the auger element 63. As best illustrated in Figure 2 drive shaft 67 is connected to a motor 68 that serves as a source of rotary drive. As is apparent from the illustrated arrangement on energising of the motor 68 the rotary drive shaft 67 is caused to rotate about its longitudinal axis. This in turn causes the auger element 63 to rotate, supported by the bearings 56a, 56b, about its longitudinal axis which in practice is an extension of the aforementioned axis of the shaft 67.

In common with the other motors forming part of the illustrated apparatus, motor 68 preferably is an electric motor; although other forms of motor, including e.g. hydraulic motors, are not excluded hereby. The apparatus 10 of the invention typically includes one or more control devices that control the delivery of power to the motors in order selectively to activate and deactivate them.

The disclosure hereof extends to apparatus in accordance with the invention as described and including therein at least a primary buttermilk fraction including butterfat. This may be in the form of grains, globules and/or crystals (although as explained it is most probable that small butterfat grains, as opposed to any other form, would pass in the primary buttermilk fraction to the buttermilk silo in the absence of the filter 50).

In operation of the apparatus of the invention at the separation stage at least some of the primary buttermilk fraction fed to the buttermilk silo 29 is subjected to a secondary separation step in the filter 50, thereby producing a filtered, secondary buttermilk fraction that in normal use is fed via outlet 58 for storage or further processing. When the valve 59 is opened to effect cleaning a buttermilk/butterfat mixture passes in pipe 62 to the separator 26. This step includes passing the primary buttermilk fraction through the filter screen 52 that at least partially surrounds an auger conveyor 56 that is rotatable so that it sweeps the inside of the filter screen 52 and transports a secondary buttermilk/butterfat mixture, including butterfat temporarily forming part of the primary buttermilk fraction, to outlet 61.

As mentioned it also is possible to devise, within the scope of the invention, a twin-auger variant of the filter 50. As explained the filter element and the housing would in such an embodiment need to be adjusted to accommodate the cross-section of a twin-auger arrangement.

Overall the invention significantly reduces butter-making plant cleaning time while very effectively improving the recovery of butterfat that otherwise would either accumulate in the buttermilk silo 29 or would clog an in-line filter requiring, in the prior art, devotion of time and effort to dismantling of the filter for cleaning purposes. The invention therefore significantly improves the efficiency of butter-making.

The listing or discussion of an apparently prior-published document in this specification should not necessarily be taken as an acknowledgement that the document is part of the state of the art or is common general knowledge.

Preferences and options for a given aspect, feature or parameter of the disclosure should, unless the context indicates otherwise, be regarded as having been disclosed in combination with any and all preferences and options for all other aspects, features and parameters of the disclosure.

## Claims

1. A filter, for use in butter-making, comprising a hollow housing supporting therein a filter screen that at least partly surrounds (i) at least one rotatable auger conveyor extending longitudinally along the interior of the housing, the housing being capable of receiving buttermilk within its interior such that on operation of the auger conveyor buttermilk passes through the filter screen to create a filtered buttermilk fraction; and butter forming part of the received buttermilk is entrained by the auger conveyor and moved longitudinally along the housing towards (ii) one or more butterfat outlet via which it is capable of exiting the housing the filter further including (iii) one or more buttermilk outlet to which in use of the filter the filtered buttermilk fraction passes after passing through the filter screen; and (iv) a normally closed, selectively openable valve that is connected to the housing and that when open permits flow of buttermilk within the housing for flushing butter from the auger conveyor and/or the filter screen via the butterfat outlet.

2. Apparatus for processing a cream or milk substance during the making of butter or a butter-like product, the apparatus comprising (a) a source of the cream or milk substance; (b) a churn, that is connected to the source, to which the cream or milk substance is fed from the source and in which the cream or milk substance is churned to form a butterfat and buttermilk mixture; (c) a primary separator that is connected to the churn and to which the butterfat and buttermilk mixture is fed following churning, the primary separator causing separation therein of buttermilk and butterfat from one another in a primary separation step in order to form respective primary buttermilk and primary butterfat fractions; and (d) a filter connected to receive buttermilk after it has been separated in the separator, **characterised in that** the filter comprises (e) a hollow housing supporting therein (f) a filter screen that at least partly surrounds (g) at least one rotatable auger conveyor extending longitudinally along the interior of the housing, the housing being capable of receiving buttermilk within its interior such that on operation of the auger conveyor buttermilk passes through the filter screen to create a filtered buttermilk fraction; and butterfat forming part of the primary buttermilk fraction is entrained by the auger conveyor and moved longitudinally along the housing towards (h) one or more butterfat outlet via which it is capable of being passed to (i) further butter processing apparatus, the apparatus further including (j) one or more buttermilk outlet to which the filtered buttermilk fraction passes after passing through the filter; and (k) a normally closed, selectively openable valve that is connected to the housing and that when open permits flow of buttermilk within the housing for flushing butter from the auger conveyor and/or the filter screen via the butterfat outlet.

3. A filter according to Claim 1 or apparatus according to Claim 2 wherein the at least one auger conveyor includes at least one rotatable auger element extending longitudinally along the housing at least partly surrounded by the filter screen, the auger element being positioned so that on rotating it sweeps the inside of the filter screen and conveys butterfat inside the filter along the hollow housing towards the one or more butterfat outlet.

4. A filter or apparatus according to Claim 3 wherein the auger conveyor is or includes an elongate, single element defining extending along its length a continuous auger spiral.

5. A filter or apparatus according to Claim 4 wherein the continuous spiral is outwardly facing and defines a plurality of smoothly inclined conveyor flights that are spaced one from another along the length of the auger conveyor and are smoothly spirally connected one to the next.

6. A filter or apparatus according to Claim 3 or any preceding claim depending from Claim 3, including an elongate rotary drive shaft that is secured at one end to an end of the rotatable auger element, the drive shaft being operatively connected to a source of rotary drive whereby on rotation of the drive shaft about its longitudinal axis the auger element is caused to rotate about a further longitudinal axis that is an extension of the longitudinal axis of the drive shaft.

7. A filter or apparatus according to Claim 3 or any preceding claim depending from Claim 3 wherein the longitudinal axis of the auger element extends vertically; and wherein the normally closed, selectively openable valve is located in a vertically extending flow path including the auger element.

8. A filter according to Claim 1 or any preceding claim depending from Claim 1; or apparatus according to Claim 2 or any preceding claim depending from Claim 2, wherein the filter screen is cylindrical and encircles the auger conveyor; and wherein buttermilk in use of the filter or apparatus is fed to the interior of the filter and is filtered by passing outwardly through the filter screen.

9. A filter according to Claim 1 or any preceding claim depending from Claim 1; or apparatus according to Claim 2 or any preceding claim depending from Claim 2 when containing buttermilk that includes butterfat in the form of butter grains, globules and/or crystals.

10. A butter-making method comprising the steps of (I) providing a cream or milk substance (m) churning the cream or milk substance to produce a butterfat and buttermilk mixture, (n) performing a primary separation step to separate the butterfat from the buttermilk in the mixture and thereby form a primary buttermilk fraction and a primary butterfat fraction, (o) subjecting at least some of the primary buttermilk fraction to a secondary separation step, thereby producing a secondary butterfat fraction and a secondary buttermilk fraction; and (p) using the primary butterfat fraction and the secondary butterfat fraction to produce butter, wherein the primary buttermilk fraction includes butterfat and wherein the secondary separation step includes (q) passing at least some of the primary buttermilk fraction through a filter screen that at least partially surrounds an auger conveyor that is rotatable so that it sweeps the inside of the filter screen and transports a secondary butterfat fraction temporarily forming part of the primary buttermilk fraction to a butterfat outlet.

11. A method according to Claim 10 wherein the butterfat forming part of the primary buttermilk fraction includes butter grains, globules and/or crystals.

12. A method according to Claim 10 or Claim 11 wherein the step of passing at least some of the primary buttermilk fraction through a filter screen includes causing buttermilk to pass outwardly through the filter screen from the interior thereof.

13. A method according to any of Claims 10 to 12 including the step of cleaning the auger conveyor *in situ* at least partially surrounded by the filter screen.

14. A method according to Claim 13 wherein the step of cleaning the auger conveyor includes opening a normally closed, selectively openable valve that is connected to a housing that supports the filter screen and that when open permits flow of buttermilk within the housing for flushing butterfat from the auger conveyor and/or the filter screen via the butterfat outlet.
